# EUROPÄISCHE PATENTSCHRIFT

(11) **EP 3 619 586 B1**
(45) Veröffentlichungstag und Bekanntmachung des Hinweises auf die Patenterteilung: **09.06.2021**
(21) Anmeldenummer: 18720580.2
(22) Anmeldetag: 25.04.2018
(51) Int. Cl.: G05D 1/02, B60D 1/62

(54) **VERFAHREN UND SYSTEM ZUM BETRIEB EINES AUTOMATISCH GEFÜHRTEN TRANSPORTFAHRZEUGS FÜR CONTAINER**
METHOD AND SYSTEM FOR OPERATING AN AUTOMATICALLY GUIDED TRANSPORT VEHICLE FOR CONTAINERS
PROCÉDÉ ET SYSTÈME SERVANT À FAIRE FONCTIONNER UN VÉHICULE DE TRANSPORT À PILOTAGE AUTOMATIQUE POUR DES CONTENEURS

(30) Priorität: 05.05.2017 DE 102017109731
(43) Veröffentlichungstag der Anmeldung: 11.03.2020
(73) Patentinhaber: Konecranes Global Corporation, 05830 Hyvinkää (FI)
(72) Erfinder: WIESCHEMANN, Armin, 46119 Oberhausen (DE); ALDEJOHANN, Stefan, 40764 Langenfeld (DE); SCHULZ, Heiko, 51381 Leverkusen (DE); SCHMIDT-EWIG, Jan, 45239 Essen (DE); EICHNER, Heinz, 40878 Ratingen (DE); AHMADIAN, Mohammad, 41468 Neuss (DE)
(74) Vertreter: Moser Götze & Partner Patentanwälte mbB
(86) Internationale Anmeldenummer: PCT/EP2018/060516
(87) Internationale Veröffentlichungsnummer: WO 2018/202483

(56) Entgegenhaltungen:
- WO-A1-2016/168650
- US-A1- 2014 277 675
- US-B1- 8 825 263

## Beschreibung

Die Erfindung betrifft ein Verfahren zum Betrieb eines automatisch geführten Transportfahrzeugs für Container gemäß dem Oberbegriff von Anspruch 1 und ein System zum Betrieb eines automatisch geführten Transportfahrzeugs für Container gemäß dem Oberbegriff von Anspruch 6.

Transportfahrzeuge für Container im Sinne der vorliegenden Erfindung sind beispielsweise aus der DE 10 2012 108 768 A1 bekannt. Derartige Transportfahrzeuge umfassen eine Zugmaschine und einen Anhänger, die gemeinsam ein gelenkiges Gespann bilden. Hierbei weist der Anhänger eine Ladefläche für mindestens einen Container auf. Die Ladefläche ist an ihren Seiten üblicherweise von Führungselementen begrenzt. Die Führungselemente werden auch als Einweiser bezeichnet. Ein derartiges Gespann kann insbesondere auch als Sattelzug ausgebildet sein.

Derartige Transportfahrzeuge werden üblicherweise nur innerbetrieblich innerhalb von Terminals zum Umschlag von Containern, insbesondere ISO-Containern, eingesetzt, nicht jedoch im öffentlichen Verkehr. Dementsprechend stellen solche Transportfahrzeuge interne Transportfahrzeuge dar, die auch als Terminal Truck oder Terminal Tractor bezeichnet werden. Hierbei erfolgt mittels der Transportfahrzeuge in einem so genannten Horizontalverkehr ein Transport von Containern zwischen Umschlaggeräten des Terminals. Die Umschlaggeräte können beispielsweise Containerbrücken oder Portalkrane sein. Mittels der Containerbrücken werden im Fall eines als Hafenterminal ausgebildeten Terminals Container zwischen einem Schiff und einem entsprechenden Transportfahrzeug umgeschlagen. Mittels der Portalkrane werden Container in ein Lager des Containerterminals ein- oder ausgelagert und hierbei von der Ladefläche eines entsprechenden Transportfahrzeugs aufgenommen oder auf dieser abgestellt. In dem Lager werden die Container zwischengelagert, bevor sie mittels Schiffen oder im öffentlichen Verkehr mittels Lkw oder im Schienenverkehr mittels Güterzügen weiter transportiert werden.

Die vorgenannten internen Transportfahrzeuge können manuell geführt werden und dementsprechend insbesondere beim Beschleunigen, Bremsen und Lenken von üblicherweise mitfahrenden Fahrern aktiv manuell gesteuert werden. Hierfür weisen manuell geführte Transportfahrzeuge eine entsprechende Fahrzeugsteuerung und üblicherweise auch eine Fahrerkabine auf, aus der zum manuellen Führen ein manuelles Eingreifen in die Fahrzeugsteuerung erfolgen kann. Alternativ können die internen Transportfahrzeuge auch automatisch geführt sein und dementsprechend insbesondere beim Beschleunigen, Bremsen und Lenken im Sinne so genannter Automated Guided Vehicles (AGV) automatisiert gesteuert werden. Hierfür weisen automatisch geführte Transportfahrzeuge eine geeignete Fahrzeugsteuerung auf, so dass aufgrund der hierüber erfolgenden automatischen Steuerung beziehungsweise Navigation kein aktives manuelles Eingreifen eines mitfahrenden Fahrers erforderlich oder möglich ist. In diesem Sinne kann ein automatisch geführtes Transportfahrzeug auch bemannt sein, wenn ein Fahrer mitfährt, hierbei jedoch nicht im Sinne eines Fahrzeugführers aktiv in die Steuerung des Transportfahrzeugs eingreifen muss oder kann. Fahrerlose, aber von einem Fahrzeugführer manuell ferngesteuerte Transportfahrzeuge gelten nicht als automatisch geführte, sondern als manuell geführte Fahrzeuge.

Ein manuell geführtes Gespann bestehend aus einem Zugfahrzeug und einem Anhänger ist auch aus der deutschen Offenlegungsschrift DE 10 2004 009 187 A1 bekannt. Nur im Spezialfall einer Rückwärtsfahrt kann zum Zweck einer Gestellaufnahme eine automatische Assistenzfunktion genutzt werden.

Die deutsche Offenlegungsschrift DE 10 2015 217 555 A1 offenbart ein Gespann aus einem Pkw und einem Anhänger. Im Rahmen einer manuellen Betriebsweise wird zur Unterstützung des Fahrers bei Fahrmanövern eine Referenztrajektorie mit einer Wunschtrajektorie verglichen

WO 2016/168650 A1 offenbart ein Verfahren zum Betrieb von automatisch geführten Transportfahrzeugen für Container nach dem Oberbegriff des Anspruchs 1.

In der DE 10 2014 114 812 A1 ist in Bezug auf ein von einem Fahrer manuell gesteuertes Gespann mit einem Zugfahrzeug und einem damit gekoppelten Anhänger eine Vorrichtung zur Ermittlung eines Knickwinkels zwischen der Zugmaschine und dem Anhänger beschrieben.

Hiervon ausgehend ist es die Aufgabe der vorliegenden Erfindung, ein Verfahren und ein System zum Betrieb eines automatisch geführten Transportfahrzeugs für Container bereitzustellen, die jeweils einen besonders sicheren automatischen Betrieb des Transportfahrzeugs ermöglichen.

Diese Aufgabe wird durch ein Verfahren mit den Merkmalen gemäß Anspruch 1 und durch ein System mit den Merkmalen gemäß Anspruch 6 gelöst. In den abhängigen Ansprüchen und der nachfolgenden Beschreibung sind weitere Ausgestaltungen der Erfindung angegeben.

Erfindungsgemäß wird ein Verfahren zum Betrieb eines automatisch geführten Transportfahrzeugs für Container, das sowohl während einer Vorwärtsfahrt als auch während einer Rückwärtsfahrt automatisch führbar ist und das eine Zugmaschine und einen Anhänger mit einer Ladefläche für mindestens einen Container aufweist, wobei das Transportfahrzeug, insbesondere die Zugmaschine, eine Fahrzeugsteuerung aufweist, um automatisch eine Lenkung und einen Fahrantrieb des Transportfahrzeugs so anzusteuern, dass das Transportfahrzeug einer Soll-Route folgt, dadurch verbessert, dass die Soll-Route unter Berücksichtigung einer Trajektorie des Transportfahrzeugs vorgegeben wird. Vorzugsweise wird jede Soll-Route auf diese Weise automatisch vorgegeben. Die vorgegebene Soll-Route wird hierbei vorzugsweise über eine drahtlose Kommunikationsverbindung an die Fahrzeugsteuerung übermittelt und von dieser automatisch durch geeignete Ansteuerung der Lenkung und des Fahrantriebs in entsprechende Fahrmanöver umgesetzt, um der Soll-Route zu folgen. Vorzugsweise ist das Transportfahrzeug als Sattelzug mit einem Terminal Truck als Zugmaschine ausgebildet, so dass der Anhänger als Auflieger ausgebildet ist.

Unter einem automatisch geführten Transportfahrzeug ist im Rahmen dieser Erfindung ein vollautomatisch betreibbares Transportfahrzeug zu verstehen, welches sowohl während einer Vorwärtsfahrt als auch während einer Rückwärtsfahrt automatisch, das heißt nicht manuell durch einen Fahrer, gesteuert beziehungsweise geführt wird. Insbesondere können von derartigen automatisch geführten Transportfahrzeugen alle Fahrmanöver automatisch durchgeführt werden und nicht etwa nur einzelne Fahrmanöver wie beispielsweise Einparkvorgänge in Rückwärstfahrt, das Durchfahren enger Passagen oder Vergleichbares.

Unter Trajektorie wird der auch als Bewegungsbahn bezeichnete Bewegungspfad des Transportfahrzeugs oder eines am Transportfahrzeug definierten fahrzeugfesten Punkts während eines Fahrmanövers verstanden. Das Fahrzeugmanöver kann hierbei insbesondere eine oder mehrere Geradeausfahrten und/oder eine oder mehrere Kurvenfahrten mit verschiedenen Kurvenradien umfassen. Bestandteil jeder Trajektorie ist also eine Abfolge von verschiedenen Positionspunkten des Transportfahrzeugs während eines bestimmten Fahrmanövers. Die jeweilige Trajektorie eines Transportfahrzeugs ist insbesondere abhängig von der Fahrzeugkinematik, das heißt von kinematischen Randbedingungen des jeweiligen Transportfahrzeugs, und damit von geometrischen Verhältnissen wie Längen, Breiten und insbesondere dem Knickwinkel des Transportfahrzeugs beziehungsweise des gelenkigen Gespanns aus Zugmaschine und Anhänger. Der Knickwinkel ergibt sich bei einem Lenkwinkel ungleich Null und ist dementsprechend von dem Lenkwinkel abhängig. Die Ermittlung und Berücksichtigung der Trajektorien erfolgt also auf Basis und somit unter Berücksichtigung der kinematischen Randbedingungen des jeweiligen Transportfahrzeugs.

In vorteilhafter Weise ist vorgesehen, dass die Berücksichtigung der Trajektorie unter Berücksichtigung der kinematischen Randbedingungen des Transportfahrzeugs, insbesondere des gelenkigen Gespanns aus der Zugmaschine und dem Anhänger des Transportfahrzeugs, erfolgt. Dadurch wird eine besonders genaue und somit sichere automatische Führung des Transportfahrzeugs möglich.

Vorteilhaft ist außerdem vorgesehen, dass für verschiedene Transportfahrzeuge verschiedene Trajektorien ermittelt und verschiedene Soll-Routen vorgegeben werden. Dadurch wird die Genauigkeit der automatischen Führung der Transportfahrzeuge weiter erhöht, da die für unterschiedliche Transportfahrzeuge spezifischen kinematischen Randbedingungen, insbesondere aufgrund von Knickwinkeln zwischen der Zugmaschine und dem Anhänger, bei der Vorgabe der Soll-Route berücksichtigt werden.

Weiterhin ist vorgesehen, dass die vorgegebene Soll-Route mit Ist-Werten einer Position und Orientierung beziehungsweise Ausrichtung des Transportfahrzeugs, insbesondere innerhalb des Betriebsbereichs eines Terminals zum Umschlag von Containern, verglichen und eine Abweichung der Ist-Werte von der Soll-Route durch entsprechende Ansteuerung der Lenkung und/oder des Fahrantriebs verringert wird. In diesem Zusammenhang ergibt sich also aus den Ist-Werten der Position und Ausrichtung des Transportfahrzeugs und dem Vergleich mit der Soll-Route, ob und wie die Fahrzeugsteuerung in die Lenkung und/oder den Fahrantrieb regelnd eingreifen muss, um eine Annäherung an die Soll-Route zu erreichen.

In vorteilhafter Weise ist vorgesehen, dass die Position und Ausrichtung des Transportfahrzeugs unter Berücksichtigung des Knickwinkels zwischen der Zugmaschine und dem Anhänger ermittelt werden. Hierbei kann die Position der Zugmaschine wie unten näher beschrieben mittels bekannten Verfahren, beispielsweise der Transpondernavigation, ermittelt werden. Hiervon ausgehend kann dann anhand des ermittelten Knickwinkels und anhand bekannter Abmessungen von Zugmaschine und Anhänger die Position und Ausrichtung des gesamten Transportfahrzeugs einschließlich des Anhängers ermittelt werden. An der Zugmaschine ist hierfür ein geeigneter Sensor zur Ermittlung eines Ist-Werts des Knickwinkels vorgesehen. Die Ermittlung eines Ist-Werts des Knickwinkels kann auch die Ermittlung des Lenkwinkels der Zugmaschine und der Drehzahl der Räder einer Achse des Anhängers über jeweils einen Sensor beinhalten.

Gemäß einer vorteilhaften Ausgestaltung des Verfahrens kann zudem vorgesehen sein, dass mittels der Lenkung ein Lenkwinkel in Abhängigkeit eines Ist-Wertes eines Knickwinkels zwischen der Zugmaschine und dem Anhänger eingestellt wird. Auf diese Weise kann die Abweichung der Ist-Werte der Position und Ausrichtung von der Soll-Route verringert werden und sich somit die Ist-Werte an die Soll-Werte annähern.

Erfindungsgemäß wird ein System zum Betrieb mindestens eines automatisch geführten Transportfahrzeugs für Container, umfassend ein Leitsystem und mindestens ein Transportfahrzeug für Container, das sowohl während einer Vorwärtsfahrt als auch während einer Rückwärtsfahrt automatisch führbar ist und das eine Zugmaschine und einen Anhänger mit einer Ladefläche für mindestens einen Container aufweist, wobei das Transportfahrzeug, insbesondere die Zugmaschine, eine Fahrzeugsteuerung aufweist, um automatisch eine Lenkung und einen Fahrantrieb des Transportfahrzeugs so anzusteuern, dass das Transportfahrzeug einer Soll-Route folgt, dadurch verbessert, dass das Leitsystem ausgebildet und eingerichtet ist, um die Soll-Route, vorzugsweise automatisch, unter Berücksichtigung einer Trajektorie des Transportfahrzeugs vorzugeben und an die Fahrzeugsteuerung zu übermitteln. Das Leitsystem ist hierfür rechnergestützt und weist dementsprechend einen Navigationsrechner mit einer Recheneinheit einschließlich einer Speichereinheit auf. Somit können auch durch das erfindungsgemäße System die in Bezug auf das erfindungsgemäße Verfahren genannten Vorteile wie eine genaue und sichere automatische Führung von einem oder mehreren Transportfahrzeugen entlang der jeweiligen Soll-Route erreicht werden.

In vorteilhafter Weise ist daher vorgesehen, dass das System, insbesondere das Leitsystem und die Fahrzeugsteuerung, ausgebildet und eingerichtet ist, um ein Verfahren nach einem der vorherigen Ansprüche auszuführen.

Gemäß einer vorteilhaften Verwendung eines erfindungsgemäßen Verfahrens und/oder Systems für ein Transportfahrzeug, ist vorgesehen, dass dessen Ladefläche von Führungselementen zum Führen und Ausrichten eines auf der Ladefläche abzustellenden Containers begrenzt ist.

Mögliche Ausführungsbeispiele der Erfindung werden anhand der nachfolgenden Beschreibung erläutert. Es zeigen:
Figur 1 eine schematische Seitenansicht eines Transportfahrzeugs für Container,
Figur 2 eine schematische Draufsicht auf das Transportfahrzeug gemäß Figur 1 während einer Kurvenfahrt,
Figur 3 eine schematische Ansicht eines Terminals zum Umschlag von Containern mit Transportfahrzeugen für Container gemäß Figur 1 und
Figur 4 eine schematische Ansicht eines alternativen Terminals zum Umschlag von Containern mit Transportfahrzeugen für Container gemäß Figur 1.

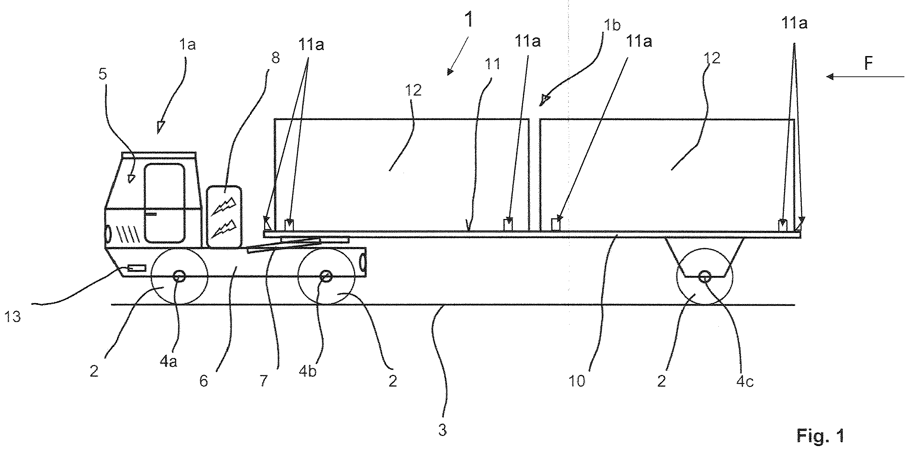

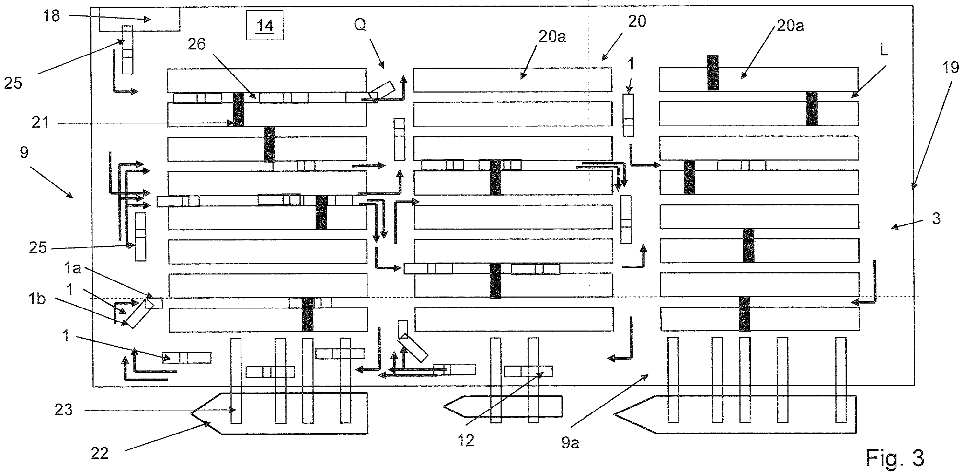

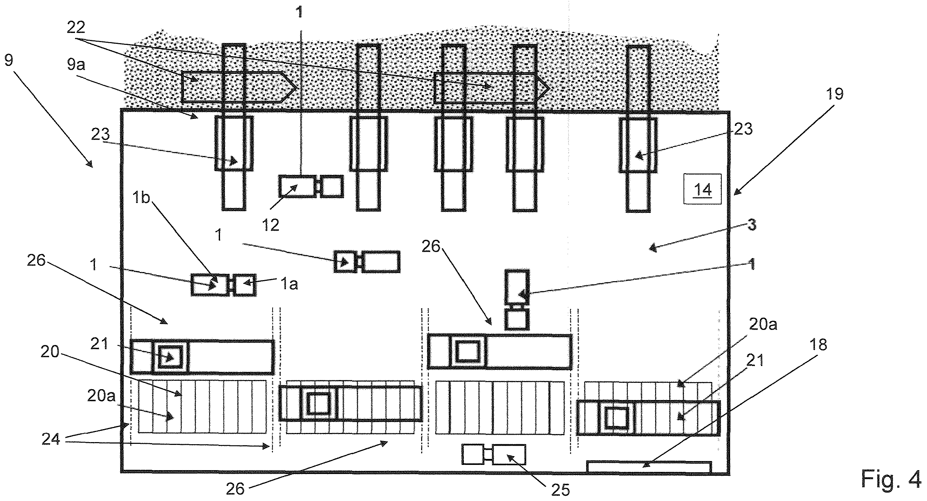

Die Figur 1 zeigt eine schematische Seitenansicht eines automatisch geführten Transportfahrzeugs 1 für Container 12, das in einem Terminal 9 zum Umschlag von Containern 12 (siehe Figuren 3 und 4) eingesetzt wird. Das Transportfahrzeug 1 ist beispielhaft als Sattelzug ausgebildet und umfasst dementsprechend eine auch als Terminal Truck bezeichnete Zugmaschine 1a sowie einen gelenkig daran angekoppelten Anhänger 1b in Form eines Aufliegers. Derartige Sattelzüge weisen in der Schwerlastausführung ein Gesamtzuggewicht von bis zu 200 t auf.

Das Transportfahrzeug 1 ist über Räder 2 frei auf einer Flurfläche 3 und damit flurgebunden, jedoch nicht schienengebunden verfahrbar. Dementsprechend ist das Transportfahrzeug 1 von Schienenfahrzeugen zu unterscheiden. Die Räder 2 sind jeweils mit einer Bereifung versehen, die vorzugsweise eine mit Luft befüllte Gummibereifung im Sinne von Pneus ist. Außerdem umfasst das Transportfahrzeug 1 einen Fahrantrieb mit mindestens einem als Elektromotor ausgebildeten Motor und einem Getriebe, um hierüber die Räder 2 anzutreiben. Der Motor und das Getriebe sind zur besseren Übersichtlichkeit nicht dargestellt. Grundsätzlich ist anstelle eines Elektromotors auch ein Verbrennungsmotor denkbar. Die Räder 2 sind in üblicher Weise an zwei Achsen 4a, 4b im Bereich der Zugmaschine 1a angeordnet. Wenn das Transportfahrzeug 1 als Sattelzug ausgebildet ist, sind auch an zumindest einer weiteren dritten Achse 4c des als Auflieger ausgebildeten Anhängers 1b Räder 2 angeordnet. Grundsätzlich ist es auch möglich, andere Achszahlen und Achsanordnungen mit entsprechender Anzahl von Rädern 2 vorzusehen, wenn dies technisch erforderlich ist.

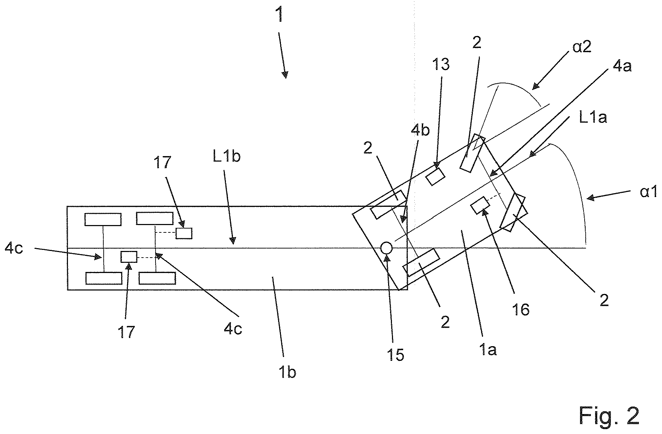

Das Transportfahrzeug 1 beziehungsweise dessen Zugmaschine 1a umfasst ein Fahrgestell 6, an dem die Räder 2 über die vordere erste Achse 4a und die hintere zweite Achse 4b gelagert sind. Zumindest einige der an der Zugmaschine 1a gelagerten Räder 2, beispielsweise die an der vorderen Achse 4a gelagerten Räder 2, sind lenkbar, um Kurvenfahrten des Transportfahrzeugs 1 zu ermöglichen. Dies ist schematisch in Figur 2 dargestellt, die eine schematische Draufsicht auf das Transportfahrzeug 1 während einer Kurvenfahrt zeigt. Während der Kurvenfahrt stellt sich zwischen der Längsachse L1a der Zugmaschine 1a und der Längsachse L1b des Anhängers ein Knickwinkel α1 ungleich Null ein. Der Knickwinkel α1 ist also definiert als der Winkel, um den die Längsachse L1a der Zugmaschine 1a während einer Kurvenfahrt des Transportfahrzeugs 1 gegenüber der Längsachse L1b des Anhängers 1b ausgelenkt ist. Über eine Lenkung der Zugmaschine 1a kann ein Lenkwinkel α2 der Räder 2 gegenüber der Längsachse L1a der Zugmaschine 1 verändert werden, um hierüber den Knickwinkel α1 zu verändern. Bei einer Geradeausfahrt sind sowohl der Knickwinkel α1 als auch der Lenkwinkel α2 gleich Null. Um einen Ist-Wert des Knickwinkels α1 ermitteln zu können, weist die Zugmaschine 1a einen geeigneten und an sich bekannten Sensor 15 auf. Der Knickwinkel α1 kann auch in an sich bekannter Weise aus Messsignalen eines Sensors 16 zur Ermittlung des Lenkwinkels α2 sowie Sensoren 17 zur Ermittlung von Drehzahlen der gegenüberliegenden Räder 2 der Achse 4c des Anhängers 1b berechnet werden. Wie in Figur 2 erkennbar, kann der Anhänger 1b abweichend von der Darstellung in Figur 1 auch mehr als eine Achse 4c aufweisen. Zur Ermittlung beziehungsweise Berechnung des Knickwinkels α1 kann auch eine Recheneinheit mit einer Speichereinheit vorgesehen sein. Die Recheneinheit kann Teil der Fahrzeugsteuerung 13 sein.

Zudem ist wie in Figur 1 dargestellt im hinteren Bereich des Fahrgestells 6 eine Sattelplatte 7 angeordnet, die Bestandteil einer Sattelkupplung ist. Die Sattelplatte 7 kann über einen hydraulischen Antrieb heb- und senkbar ausgebildet sein, so dass die Zugmaschine 1a den Anhänger 1b aktiv und selbstständig an- beziehungsweise abkuppeln kann. Der hydraulische Hub der Sattelplatte 7 ermöglicht es, Sattellasten bis 45 t anzuheben. Auch ein andersartiges An- und Abkuppeln des Anhängers 1b ohne hydraulische Hubmöglichkeit ist denkbar, beispielsweise durch einen manuell betätigbaren Kupplungsmechanismus. Die Sattelplatte 7 kann auch derart gelenkartig ausgebildet sein, dass kein regelmäßiges Trennen von Zugmaschine 1a und Anhänger 1b vorgesehen ist und somit Zugmaschine 1a und Anhänger 1b dauerhaft zu einer festen Einheit in Form eines Sattelzugs verbindet. Außerdem trägt das Fahrgestell 6 eine Batterie 8, die den oder die Elektromotoren des Fahrantriebs des Transportfahrzeugs 1 speist und mit diesem mitbewegt wird. Die Batterie 8 ist vorzugsweise als wiederaufladbare Lithium-Ionen-Batterie oder als Bleibatterie ausgebildet und oberhalb des Fahrgestells 6 oder unterhalb desselben beispielsweise zwischen den beiden Achsen 4a, 4b angeordnet, um einen einfachen Austausch mit einer geladenen Batterie 8 zu ermöglichen. Alternativ kann auch an dem Anhänger 1b eine zusätzliche Batterie 8 zur Speisung des Fahrantriebs angeordnet und hierfür mit dem Fahrantrieb elektrisch verbunden sein.

Der als Auflieger ausgebildete Anhänger 1b weist keine an dem der Zugmaschine 1a zugewandten Ende angeordnete vordere Achse, sondern nur eine oder mehrere hintere Achsen 4c auf, die am von der Zugmaschine 1a abgewandten Ende unter einem Rahmen 10 des Anhängers 1b gelagert sind. Eine Art vordere Achse des Anhängers 1b wird jedoch durch die hintere Achse 4b der Zugmaschine 1a gebildet. Auch weist der Anhänger 1b nicht dargestellte und an seinem der Zugmaschine 1a zugewandten vorderen Ende angeordnete Stützen auf. Die Stützen sind zum Abstellen des Anhängers 1b nach erfolgtem Abkuppeln und je nach Ausgestaltung der Sattelplatte 7 zum Auf- und Absatteln eines als Auflieger ausgebildeten Anhängers 1b an der Zugmaschine 1a vorgesehen. Außerdem weist der Anhänger 1b keinen eigenen Antrieb auf.

Des Weiteren weist das Transportfahrzeug 1 beziehungsweise dessen Anhänger 1b auf seinem Rahmen 10 eine im Wesentlichen ebene Ladefläche 11 für Container 12 auf. In der Figur 1 sind in Fahrtrichtung F des Transportfahrzeugs 1 bei einer Vorwärtsfahrt gesehen hintereinander zwei als ISO-Container ausgebildete Container 12 mit einer Länge von etwa 20 Fuß auf der Ladefläche 11 abgestellt. ISO-Container im oben definierten Sinne haben genormte Eckbeschläge. Die Eckbeschläge können beispielsweise von dem als so genannter Spreaderrahmen ausgebildeten Lastaufnahmemittel eines Krans ergriffen werden, um den ISO-Container von der Ladefläche 11 anzuheben oder auf dieser abzustellen.

Um einen zu transportierenden Container 12 und im Fall von ISO-Containern insbesondere dessen Eckbeschläge beim Absetzen auf der Ladefläche 11 führen und in Bezug auf die Ladefläche 11 ausrichten zu können, wird die Ladefläche 11 an ihren Seiten von mehreren Führungselementen 11a begrenzt. Die Führungselemente 11a weisen hierfür Führungsflächen mit einem schrägen Verlauf auf. Hierbei erstrecken sich die Führungsflächen von der Ladefläche 11 nach oben und außen weg und zu der Ladefläche 11 nach unten und innen hin. Vorzugsweise sind die Führungselemente 11a paarweise an gegenüberliegenden Seiten, insbesondere Längsseiten und/oder Schmalseiten, der Ladefläche 11 angeordnet. Die Führungsflächen eines Paars von Führungselementen 11a bilden eine Art Trichter, deren schräger Verlauf sich zur Ladefläche 11 hin verjüngt, um die Führungs- und Ausrichtfunktion zu realisieren. Dementsprechend erweitern sich die Führungsflächen eines Paars von Führungselementen 11a von der Ladefläche 11 nach oben weggerichtet.

Das Transportfahrzeug 1 ist im oben definierten Sinne automatisch geführt und weist hierfür eine in Figur 1 schematisch dargestellte Fahrzeugsteuerung 13 auf, die auch als Navigationssystem dient. Des Weiteren kann das Transportfahrzeug 1 optional von einem Fahrer auch im oben definierten Sinne manuell innerhalb des jeweiligen Terminals 9 geführt beziehungsweise gesteuert werden, so dass auch ein Wechsel zwischen manueller und automatischer Führung des Transportfahrzeugs 1 denkbar ist. Für die manuelle Variante ist im vorderen Bereich der Zugmaschine 1a eine Fahrerkabine 5 mit entsprechenden Steuerungsmitteln für einen manuellen Eingriff in die Fahrzeugsteuerung 13 angeordnet. Bei ausschließlich automatisch geführten Transportfahrzeugen 1 kann die Fahrerkabine 5 wie in Figur 1 dargestellt fahrerlos bleiben oder auch weggelassen werden.

Die Figur 3 zeigt eine schematische Ansicht eines Terminals 9 zum Umschlag von Containern 12, in dem Transportfahrzeuge 1 gemäß Figur 1 eingesetzt werden, in der Draufsicht. Das Terminal 9 ist beispielhaft als Hafenterminal ausgebildet. Hierbei können an einem Kai 9a eines Hafens mehrere Schiffe 22 anlegen, um Container 12 anzuliefern oder abzuholen. Für das Beladen beziehungsweise Löschen der Schiffe 22 sind an dem Kai 9a Containerbrücken 23 vorgesehen, die auch als Ship-to-Shore Krane - kurz: STS-Kran - bezeichnet werden und deren Ausleger sich einerseits über die Schiffe 22 und andererseits über den Kai 9a erstrecken. Alternativ kann das Beladen beziehungsweise Löschen der Schiffe 22 auch über so genannte Hafenkrane erfolgen, deren Ausleger hierbei um eine vertikale Achse über das entsprechende Schiff 22 verschwenkt wird.

Das Terminal 9 ist in üblicher Weise im Sinne eines abgegrenzten Betriebsbereichs von einer beispielsweise als Zaun oder Mauer ausgebildeten Begrenzung 19 umgeben und hierüber von seiner äußeren Umgebung und somit vom öffentlichen Verkehr außerhalb des Terminals 9 und dort fahrenden externen Transportfahrzeugen 25, beispielsweise konventionelle Lkw, getrennt. Für die externen Transportfahrzeuge 25 ist das Terminal 9 nur über Passierbereiche 18 erreichbar, um Container 12 abzuholen oder anzuliefern. Zum gezielten beziehungsweise kontrollierten Öffnen und Schließen jedes Passierbereichs 18 kann auch jeweils eine Sicherheitsschleuse zum An- und Abmelden einschließlich einer Identifikation der ein- und ausfahrenden externen Fahrzeuge und deren Fahrer vorgesehen sein.

Zudem umfasst das Terminal 9 innerhalb der Begrenzung 19 ein Containerlager 20, in dem Container 12 zur kurzzeitigen Zwischenlagerung in mindestens einem auch als Stack bezeichneten Lagerbereich 20a gestapelt werden können. Dies kann der Fall sein, nachdem die Container 12 von den Schiffen 22 abgeladen wurden und bevor sie für den weiteren Transport außerhalb des Terminals 9 auf ein Straßenfahrzeug beziehungsweise Transportfahrzeug 25 oder Schienenfahrzeug geladen oder nachdem sie hiervon angeliefert wurden und bevor sie auf die Schiffe 22 geladen werden. Über die den Kai 9a des Hafens umfassende Flurfläche 3 verfahren die nicht für den öffentlichen Verkehr ausgelegten und zugelassenen internen Transportfahrzeuge 1, um die beispielsweise als ISO-Container ausgebildeten Container 12 zwischen den Containerbrücken 23 und den als Container-Stapelkranen dienenden Portalkranen 21 des Containerlagers 20 des Terminals 9 zu transportieren.

Üblicherweise umfasst das Containerlager 20 in einem derartigen Terminal 9 mehrere Lagerbereiche 20a, die jeweils reihenförmig beziehungsweise rasterartig nebeneinander und voneinander beabstandet angeordnet sind. In jedem Lagerbereich 20a können mehrere Reihen von Containern 12 mit ihren Längsseiten nebeneinander und je Reihe mehrere Container 12 übereinander abgestellt werden. Zum Bewirtschaften des Containerlagers 20 beziehungsweise der jeweiligen Lagerbereiche 20a, das heißt zum dortigen Ein- und Auslagern von Containern 12, ist je Lagerbereich 20a des Containerlagers 20 mindestens ein entsprechender Portalkran 21 vorgesehen, um Container 12 zur Ein- oder Auslagerung in dem Containerlager 20 von den Transportfahrzeugen 1 beziehungsweise 25 zu übernehmen oder an diese abzugeben. Üblicherweise sind in einem derartigen Terminal 9 mehrere Lagerbereiche 20a vorgesehen, die jeweils zum dortigen Ein- und Auslagern von Containern 12 von mindestens einem als Portalkran 21 ausgebildeten Stapelkran bewirtschaftet werden. Die Umschlaggeräte darstellenden Portalkrane 21 überspannen mit ihren von Portalstützen getragenen Kranträgern den entsprechenden Lagerbereich 20a und die darin gestapelten Container 12. Für das Ein- und Auslagern von Containern 12 können die Portalkrane 21 über den Lagerbereich 20a in dessen Längsrichtung des Portalkrans 21 hinweg verfahren.

Innerhalb des Terminals 9 erfolgt zum Transport von Containern 12 ein gemeinsamer und gleichzeitiger Betrieb von mindestens einem Transportfahrzeug 1, das im Sinne der obigen Definition ein internes und vorzugsweise automatisch geführtes Fahrzeug ist, und mindestens einem manuell geführten externen Transportfahrzeug 25, das beispielsweise ein für den öffentlichen Straßenverkehr zugelassener konventioneller Lkw oder Sattelzug sein kann. Auch Transportfahrzeuge 1 in der manuellen Variante des in Figur 1 beschriebenen Transportfahrzeugs 1 mit Fahrerkabine 5 können zusätzlich oder alternativ zu der automatisch geführten Variante innerhalb des Terminals 9 verkehren. Mittels der internen Transportfahrzeuge 1 erfolgt ein Transport der Container 12 zwischen dem Containerlager 20 beziehungsweise dessen Umschlaggeräten und den am Kai 9a angeordneten Umschlaggeräten in Form der Containerbrücken 23 oder Hafenkrane beziehungsweise Hafenmobilkrane, mit denen die Container 12 zwischen den Transportfahrzeugen 1 und den Schiffen 22 umgeschlagen und dementsprechend die Transportfahrzeuge 1 am Kai 9a be- und entladen werden können. Mittels der externen Transportfahrzeuge 25 können Container 12 vom Containerlager 20 beziehungsweise dessen Umschlaggerät für den weiteren Transport im öffentlichen Verkehr abgeholt oder nach einem Transport im öffentlichen Verkehr zur Zwischenlagerung im Containerlager 20 angeliefert werden. Diese Transporte erfolgen jeweils in einem so genannten Horizontalverkehr.

Die den Lagerbereichen 20a als Umschlaggeräte zugeordneten Portalkrane 21 sind in Figur 3 als so genannte gummibereifte Stapelkrane (Rubber-Tyred Gantry Crane - kurz: RTG) oder schienengebundene Stapelkrane (Rail-Mounted Gantry Crane - kurz: RMG) ausgebildet, die entweder von einer in einer Krankabine mitfahrenden Bedienperson manuell geführt beziehungsweise gesteuert werden oder (teil-)automatisiert geführt beziehungsweise gesteuert werden. Dementsprechend wird das in Figur 3 schematisch dargestellte Terminal 9 auch als RMG- beziehungsweise RTG-Terminal bezeichnet. Bei diesem Terminaltyp sind zwischen den sich parallel zum Rand des verlaufenden Kais 9a erstreckenden Lagerbereichen 20a geradlinige und rasterförmig angeordnete ein- oder mehrspurige Gassen L, Q vorgesehenen, in denen die internen Transportfahrzeuge 1 sowie die über den Passierbereich 18 in das Terminal 9 ein- und ausfahrenden externen Transportfahrzeuge 25 verkehren können. Das Beladen und Entladen der Transportfahrzeuge 1, 25 durch die Portalkran 21 erfolgt in den entlang der Längsseiten führenden Längsgassen L der Lagerbereiche 20a. Dort sind als Übergabespuren beziehungsweise Übergabebereich 26 dienende Fahrspuren für die Transportfahrzeuge 1, 25 vorgesehen, die von dem jeweiligen Portalkran 21 ebenfalls überspannt werden. Durch die in Figur 3 dargestellten abgewinkelten Pfeile wird angedeutet, dass die Transportfahrzeuge 1, 25 über quer und insbesondere senkrecht zum Kai 9a verlaufende Quergassen Q beziehungsweise deren Fahrspuren in die Längsgassen L und die dortigen Übergabespuren hinfahren oder diese wieder verlassen können. Auch kann vorgesehen sein, dass die Portalkrane 21 mehrere in Längsrichtung benachbarte Lagerbereiche 20a, die durch eine Quergasse Q voneinander beabstandet sind, bewirtschaften und hierfür eine oder mehrere Quergassen Q überfahren. Alternativ kann jedem Lagerbereich 20a mindestens ein Portalkran 21 zugeordnet sein. Der Bereich des Kais 9a mit den dortigen Umschlaggeräten kann jedoch den internen Transportfahrzeugen 1 vorbehalten sein, weshalb entsprechende Barrieren oder Passierbereiche mit Sicherheitsschleusen innerhalb des Terminals 9 vorgesehen sein können. Dies ist durch die gestrichelte Linie in Figur 3 angedeutet.

In Figur 4 ist ein alternatives Terminal 9 dargestellt, das als so genanntes ASC-Terminal ausgebildet ist. Anders als bei dem in Figur 3 dargestellten Terminal 9 sind die Portalkrane 21 des Containerlagers 20 hier als so genannte automatisierte und schienengebundene Stapelkrane ausgebildet, die auch als Automated Stacking Crane - kurz: ASC bezeichnet werden. Bei diesem Terminaltyp sind zwischen den Lagerbereichen 20a lediglich schmale Gassen als Fahrwege 24 für die ASCs vorgesehen. Die Fahrwege 24 für die ASCs umfassen Schienen, auf denen der jeweilige ASC verfahren und zwischen deren paarweiser Anordnung jeweils ein Lagerbereich 20a angeordnet ist. Diese Gassen sind nicht für eine Durchfahrt der Transportfahrzeuge 1 und 25 vorgesehen und hierfür in der Regel zu schmal. Anders als bei RMG- beziehungsweise RTG-Terminals erstrecken sich die Lagerbereiche 20a auch nicht entlang und insbesondere parallel, sondern üblicher Weise quer und insbesondere senkrecht zum Kai 9a. Auch die Portalkrane 21 verfahren dementsprechend quer zum Kai 9a. Des Weiteren weist das Containerlager 20 des ASC-Terminals keine an den Längsseiten der Lagerbereiche 20a angeordneten Übergabespuren beziehungsweise Übergabebereiche 26 auf. Stattdessen sind an den in Längsrichtung weisenden Längsenden des jeweiligen Lagerbereichs 20a kopfseitige Übergabebereiche 26 vorgesehen. Ein derartiges ASC-Terminal umfasst einen bezüglich des Containerlagers 20 wasserseitigen beziehungsweise kaiseitigen Umschlagbereich, der durch die vorbeschriebene Ausgestaltung des ASC-Terminals und des Containerlagers 20 im regulären Betrieb des Terminals 9 von dem landseitigen Verkehr externer Transportfahrzeuge 25 im landseitigen Umschlagbereich getrennt ist. Lediglich in besonderen Fällen, beispielsweise zu Wartungs- oder Reparaturzwecken, können Fahrzeuge zwischen dem wasserseitigen Umschlagbereich und dem landseitigen Umschlagbereich verkehren, wofür dann Gassen mit ausreichender Breite genutzt werden können. Die Transportfahrzeuge 25 nutzen für die Einfahrt in den landseitigen Umschlagbereich beziehungsweise die Ausfahrt aus diesem einen Passierbereich 18 im obigen Sinne.

Am Verkehr im wasserseitigen Umschlagbereich sind dementsprechend nur interne automatisch und/oder manuell geführte Transportfahrzeuge 1 beteiligt. Dieser Bereich kann somit ein abgegrenzter reiner Automatik-Bereich sein. Im landseitigen Umschlagbereich können auch interne manuell geführte Transportfahrzeuge 1 im Mischverkehr mit externen manuell geführten Transportfahrzeugen 25 eingesetzt werden, um beispielsweise eine Anbindung eines Bahnterminals innerhalb des Terminals 9 sicherzustellen.

Die internen Transportfahrzeuge 1 dürfen jedoch in keinem der vorbeschriebenen Terminals 9 durch den jeweiligen Passierbereich 18 fahren, da sie nicht in den öffentlichen Verkehr außerhalb des Terminals 9 gelangen dürfen und auch nur innerhalb des Terminals 9 bestimmungsgemäß betrieben werden können. Hiervon ausgenommen ist ein Verlassen des wasserseitigen Umschlagbereichs sowie ein Verlassen des landseitigen Umschlagbereichs beziehungsweise des Terminals 9 beispielsweise für Wartungs- oder Reparaturzwecke, was nicht als bestimmungsgemäßer Betrieb gilt.

Um den Verkehr innerhalb des jeweiligen Terminals 9 gemäß Figur 3 beziehungsweise gemäß Figur 4 zu koordinieren, ist ein rechnergestütztes Leitsystem 14 vorgesehen, über das Transportaufträge für die internen Transportfahrzeuge 1 geplant, verwaltet und zur Routenplanung und Routenüberwachung verwendet werden. Auch kann die Lagerhaltung beziehungsweise Verwaltung des Containerlagers 20 über das Leitsystem 14 beziehungsweise dessen Navigationsrechner erfolgen und in die Planung der Transportaufträge beziehungsweise Routen einfließen. Die zur Abarbeitung von Transportaufträgen abzufahrenden Routen werden im Sinne von Soll-Routen mittels des Leitsystems 14 generiert und über drahtlose Kommunikationsverbindungen beispielsweise in Form von WLAN-Verbindungen, an die Transportfahrzeuge 1 beziehungsweise deren Fahrzeugsteuerung 13 übermittelt. Die Soll-Routen können aus mehreren Einzelabschnitten mit jeweils einem Start- und einem Zielpunkt bestehen. Zur Koordinierung des Verkehrs beziehungsweise der Routenplanung und Routenüberwachung erfolgt durch das Leitsystem 14 vorzugsweise auch eine kontinuierliche Verarbeitung der zeitlich veränderlichen Positionen und Ausrichtungen der im Terminal 9 befindlichen Transportfahrzeuge 1 und weiterer Betriebsinformationen wie beispielsweise die jeweils genutzten Fahrbereiche, Fahrspuren und Fahrtrichtungen der Transportfahrzeuge 1 sowie Fahrgeschwindigkeiten und Verkehrsregeln. Auch eine Vorgabe und Änderung von Soll-Routen kann hierbei über das Leitsystem 14 und die Kommunikationsverbindungen erfolgen, beispielsweise durch für bestimmte Zeitpunkte vorgegebene Zielpositionen, zu nutzende Fahrspuren und/oder Fahrtrichtungen. Zudem kann das Leitsystem 14 dynamisch Bereiche, insbesondere einzelne Fahrspuren im Sinne von Sperrbereichen blockieren oder freigeben und somit sicherstellen, dass sich in einem vorgegebenen Bereich nur ein Transportfahrzeug 1 befindet.

Mittels der Fahrzeugsteuerung 13 sind die in Vorwärtsfahrt oder Rückwärtsfahrt möglichen Fahrmanöver der automatisch geführten Transportfahrzeuge 1 automatisch steuerbar, indem die vom Leitsystem 14 übermittelten und somit vorgegebenen Soll-Routen steuerungstechnisch in entsprechende Fahrmanöver insbesondere auf vorgegebenen Fahrspuren innerhalb des Terminals 9 umgesetzt werden. Die Umsetzung in Fahrmanöver umfasst die erforderlichen Fahrtvorgaben in Form von Soll-Werten für die Ansteuerung des Fahrantriebs und/oder der Lenkung des jeweiligen Transportfahrzeugs 1. In diesem Zusammenhang werden mittels der Fahrzeugsteuerung 13 also Lenkvorgänge und Geschwindigkeiten sowie Beschleunigungen und Verzögerungen, gegebenenfalls durch einen Bremsvorgang, des Transportfahrzeugs 1 automatisch gesteuert.

Die Soll-Routen beziehungsweise deren Einzelabschnitte werden vorzugsweise automatisch durch das Leitsystem 14 vorgegeben, wobei auch zumindest eine zuvor ermittelte Trajektorie des jeweiligen Transportfahrzeugs 1 während eines Fahrmanövers berücksichtigt wird. Unter Trajektorie wird der auch als Bewegungsbahn bezeichnete Bewegungspfad des Transportfahrzeugs 1 oder eines am Transportfahrzeug 1 definierten fahrzeugfesten Punkts während eines Fahrmanövers verstanden. Das Fahrzeugmanöver kann hierbei insbesondere eine oder mehrere Geradeausfahrten und/oder eine oder mehrere Kurvenfahrten mit verschiedenen Kurvenradien umfassen. Bestandteil jeder Trajektorie ist also eine Abfolge von verschiedenen Positionspunkten des Transportfahrzeugs 1 während eines bestimmten Fahrmanövers. Die jeweilige Trajektorie eines Transportfahrzeugs 1 ist insbesondere abhängig von der Fahrzeugkinematik, das heißt von kinematischen Randbedingungen des jeweiligen Transportfahrzeugs 1, und damit von geometrischen Verhältnissen wie Längen, Breiten und insbesondere dem Knickwinkel α1 des Transportfahrzeugs 1 beziehungsweise des gelenkigen Gespanns aus Zugmaschine 1a und Anhänger 1b. Der Knickwinkel α1 ergibt sich bei einem Lenkwinkel α2 ungleich Null und ist dementsprechend von dem Lenkwinkel α2 abhängig. Die Ermittlung und Berücksichtigung der Trajektorien erfolgt also auf Basis und somit unter Berücksichtigung der kinematischen Randbedingungen des jeweiligen Transportfahrzeugs 1.

Die Trajektorien können insbesondere für verschiedene Fahrmanöver mit möglichen Kurvenfahrten mit unterschiedlichen Kurvenradien und Geschwindigkeiten und dementsprechend unterschiedlichen Lenkwinkeln α2 und zugehörigen Lenkeinschlägen der Lenkung, aber auch mit Geradeausfahrten ermittelt werden. Die Ermittlung der Trajektorien kann beispielsweise auf einer Hüllkurvenuntersuchung basieren. Ebenso kann der Einfluss anderer Randbedingungen wie der transportierten beziehungsweise zu transportierenden Last auf die jeweilige Trajektorie bei entsprechenden Fahrmanövern berücksichtigt werden. Die Last oder zumindest das Vorhandensein einer Last kann hierbei auf verschiedene Weise erfasst werden. Zum einen können für jedes Transportfahrzeug 1 die Fahrzeugzustände "beladen" beziehungsweise "unbeladen" als Parameter im Leitsystem 14 hinterlegt sein und entsprechend berücksichtigt werden. Zum anderen kann das Transportfahrzeug 1 mit einer geeigneten Messvorrichtung ausgestattet werden, um einen genauen Lastwert ermitteln zu können. Auf diese Weise können für unterschiedliche Fahrmanöver und Randbedingungen unterschiedliche Trajektorien verschiedener Zugmaschinen 1a und Anhänger 1b ermittelt werden, da es die Zugmaschinen 1a und Anhänger 1b in zahlreichen Varianten und Kombinationen gibt. Jede andersartige Zugmaschine 1a und jede andersartige Kombination aus Zugmaschine 1a und Anhänger 1b kann daher für dasselbe Fahrmanöver eine unterschiedliche Trajektorie aufweisen. Die unterschiedlichen vorab ermittelten Trajektorien können in dem Leitsystem 14 und/oder der Fahrzeugsteuerung 13 gespeichert werden. Hierbei ist dann beispielsweise hinterlegt, welche Kurvenradien ein bestimmtes Transportfahrzeug 1 beziehungsweise eine bestimmte Zugmaschine 1a mit einem bestimmten Anhänger 1b konfliktfrei fahren kann, ohne beispielsweise auf andere Fahrspuren zu gelangen und wie hierbei gelenkt werden muss, beispielsweise um vorwärts oder rückwärts und hierbei geradeaus oder in einer Kurve zu fahren und dabei innerhalb der vorgegebenen Fahrspur zu bleiben. Auch ist es denkbar, dass in diesem Zusammenhang die Trajektorie und/oder die aktuell vorgegebene Soll-Route mindestens eines anderen Transportfahrzeugs 1 berücksichtigt wird, um Konflikte zwischen den Trajektorien und/oder den Soll-Routen mehrerer Transportfahrzeuge 1 zu vermeiden. In Kenntnis und unter Berücksichtigung der für ein bestimmtes Transportfahrzeug 1 möglichen Trajektorien kann dann von dem Leitsystem 14 für jedes Transportfahrzeug 1 eine individuelle Soll-Route vorgegeben und an die Fahrzeugsteuerung 13 übermittelt werden, wobei die Soll-Route einer für das Transportfahrzeug 1 möglichen Trajektorie entspricht. Dadurch ist sichergestellt, dass nur solche Soll-Routen vorgegeben werden, denen das jeweilige Transportfahrzeug 1 konfliktfrei entlang einer möglichen Trajektorie folgen kann.

Um den Fahrantrieb und die Lenkung im Rahmen eines automatisierten Betriebs des Transportfahrzeugs 1 zielgerichtet ansteuern zu können, muss auch der Ist-Zustand im Sinne von Ist-Werten der Position und Orientierung beziehungsweise Ausrichtung des Transportfahrzeugs 1 an das Leitsystem 14 und/oder die Fahrzeugsteuerung 13 zurückgemeldet werden. In diesem Zusammenhang werden auch die mittels der Sensoren 15, 16 und 17 ermittelten Werte des Knickwinkel α1, Lenkwinkels α2 und Drehzahlen der entsprechenden Räder 2 durch die Fahrzeugsteuerung 13 und/oder das Leitsystem 14 ausgewertet. Ist-Werte der Position und Orientierung beziehungsweise Ausrichtung der Zugmaschine 1a können beispielsweise mittels eines Ortungssystems ermittelt werden, das Transpondertechnologie nutzt. Hierbei kann die Lage der Zugmaschine 1a über eine oder zwei an der Zugmaschine 1a befestigte Antennen relativ zu zwei am Flurboden 3 befestigten Transpondern berechnet werden. Auch andere Ortungssysteme zur Ermittlung der Position und Ausrichtung der Zugmaschine 1a sind denkbar, beispielsweise D-GPS/Long Position Radar - kurz: LPR -, wobei die Zugmaschine 1a mit zwei Antennen versehen ist und Distanzen relativ zu als Ortsmarken dienenden ortsfesten LPR-Transpondern gemessen werden, um hierüber die Position und Ausrichtung/Orientierung zu berechnen. In Kenntnis der Position und Orientierung beziehungsweise Ausrichtung der Zugmaschine 1a sowie in Kenntnis des ermittelten Knickwinkels α1 und Abmessungen des Anhängers 1b kann dann auch die Position und Ausrichtung des Anhängers 1b und somit ein Ist-Wert der Position und Orientierung/Ausrichtung des gesamten Transportfahrzeugs 1 ermittelt werden.

Mittels der Fahrzeugsteuerung 13 erfolgt dann vorzugsweise fortlaufend ein Vergleich der Ist-Werte von Position und Ausrichtung des Transportfahrzeugs 1 unter der zuvor beschriebenen Berücksichtigung von Ist-Werten des Knickwinkels α1 mit der jeweils unter Berücksichtigung einer geeigneten Trajektorie vorgegebenen Soll-Route. Abweichungen dieses Vergleichs werden durch entsprechende Ansteuerung der Lenkung und/oder des Fahrantriebs im Sinne einer Regelung der Lenkung und/oder des Fahrantriebs verringert, damit das Transportfahrzeug 1 der Soll-Route mit möglichst geringer Abweichung im Sinne einer automatischen Führung folgt. Im Rahmen der Regelung der Lenkung beziehungsweise des Fahrantriebs sind etwaige Fehler der Sensoren zu berücksichtigen, da Fehler hier einen großen Einfluss haben, der zu einer großen Abweichung der vorgenannten Ist-Werte von der Soll-Route führen kann.

Die vorherigen Ausführungen, insbesondere die Berücksichtigung einer Trajektorie bei der Vorgabe der Soll-Route und die Berücksichtigung des Ist-Zustands, lassen sich auch auf manuell geführte Transportfahrzeuge 1 übertragen. In diesem Zusammenhang können bei manueller Führung der Transportfahrzeuge 1 die Fahrer über ein Fahrerinformationssystem des Transportfahrzeugs 1 und auf Basis der von dem Leitsystem 14 vorgegebenen Soll-Routen Fahranweisungen erhalten. Die Fahranweisungen müssen dann von dem Fahrer durch manuelles Eingreifen in die Fahrzeugsteuerung 13 in entsprechende Fahrmanöver umgesetzt werden. Hierbei können die Fahranweisen auch unter Berücksichtigung und somit in Abhängigkeit des Ist-Zustands kontinuierlich angepasst werden, insbesondere wenn ein Fahrer die auf einer vorgegebenen Soll-Route basierenden Fahranweisungen nicht oder nicht innerhalb einer vorgebbaren Toleranz befolgt.

### Bezugszeichenliste

- 1: Transportfahrzeug
- 1a: Zugmaschine
- 1b: Anhänger
- 2: Rad
- 3: Flurfläche
- 4a: erste Achse
- 4b: zweite Achse
- 4c: dritte Achse
- 5: Fahrerkabine
- 6: Fahrgestell
- 7: Sattelplatte
- 8: Batterie
- 9: Terminal
- 9a: Kai
- 10: Rahmen
- 11: Ladefläche
- 11a: Führungselement
- 12: Container
- 13: Fahrzeugsteuerung
- 14: Leitsystem
- 15: Sensor zur Ermittlung des Knickwinkels
- 16: Sensor zur Ermittlung des Lenkwinkels
- 17: Sensor zur Ermittlung der Drehzahl
- 18: Passierbereich
- 19: Begrenzung
- 20: Lager
- 20a: Lagerbereich
- 21: Portalkran
- 22: Schiff
- 23: Containerbrücke
- 24: Fahrweg
- 25: Transportfahrzeug
- 26: Übergabebereich
- F: Fahrtrichtung
- L: Längsgasse
- L1a: Längsachse der Zugmaschine
- L1b: Längsachse des Anhängers
- Q: Quergasse
- α1: Knickwinkel
- α2: Lenkwinkel

## Patentansprüche

1. Verfahren zum Betrieb von automatisch geführten Transportfahrzeugen (1) für Container (12), die jeweils sowohl während einer Vorwärtsfahrt als auch während einer Rückwärtsfahrt automatisch geführt werden und eine Zugmaschine (1a) und einen Anhänger (1b) mit einer Ladefläche (11) für mindestens einen Container (12) aufweisen, wobei das jeweilige Transportfahrzeug (1), insbesondere die Zugmaschine (1a), eine Fahrzeugsteuerung (13) aufweist, um eine Lenkung und einen Fahrantrieb des Transportfahrzeugs (1) so anzusteuern, dass das Transportfahrzeug (1) einer Soll-Route folgt, **dadurch gekennzeichnet, dass** die Soll-Route unter Berücksichtigung einer vorab ermittelten Trajektorie des jeweiligen Transportfahrzeugs (1) vorgegeben wird, wobei unter Trajektorie ein Bewegungspfad des jeweiligen Transportfahrzeugs (1) während eines Fahrmanövers verstanden wird, wobei die Trajektorie und/oder die aktuell vorgegebene Soll-Route mindestens eines anderen Transportfahrzeugs (1) berücksichtigt wird, um Konflikte zwischen den Trajektorien und/oder den Soll-Routen mehrerer Transportfahrzeuge (1) zu vermeiden, wobei für verschiedene Transportfahrzeuge (1) verschiedene Trajektorien ermittelt und verschiedene Soll-Routen vorgegeben werden.

2. Verfahren nach Anspruch 1, **dadurch gekennzeichnet, dass** die Berücksichtigung der Trajektorie unter Berücksichtigung der kinematischen Randbedingungen des Transportfahrzeugs (1) erfolgt.

3. Verfahren nach einem der Ansprüche 1 oder 2, **dadurch gekennzeichnet, dass** die vorgegebene Soll-Route mit Ist-Werten einer Position und Orientierung des Transportfahrzeugs (1) verglichen und eine Abweichung der Ist-Werte von der Soll-Route durch entsprechende Ansteuerung der Lenkung und/oder des Fahrantriebs verringert wird.

4. Verfahren nach Anspruch 3, **dadurch gekennzeichnet, dass** die Position und Ausrichtung des Transportfahrzeugs (1) unter Berücksichtigung des Knickwinkels (α1) zwischen der Zugmaschine (1a) und dem Anhänger (1b) ermittelt werden.

5. Verfahren nach einem der Ansprüche 1 bis 4, **dadurch gekennzeichnet, dass** mittels der Lenkung ein Lenkwinkel (α2) in Abhängigkeit eines Ist-Wertes eines Knickwinkels (α1) zwischen der Zugmaschine (1a) und dem Anhänger (1b) eingestellt wird.

6. System zum Betrieb von automatisch geführten Transportfahrzeugen (1) für Container (12), umfassend ein Leitsystem (14) und Transportfahrzeuge (1) für Container (12), die jeweils sowohl während einer Vorwärtsfahrt als auch während einer Rückwärtsfahrt automatisch führbar sind und eine Zugmaschine (1a) und einen Anhänger (1b) mit einer Ladefläche (11) für mindestens einen Container (12) aufweisen, wobei das jeweilige Transportfahrzeug (1), insbesondere die Zugmaschine (1a), eine Fahrzeugsteuerung (13) aufweist, um automatisch eine Lenkung und einen Fahrantrieb des Transportfahrzeugs (1) so anzusteuern, dass das Transportfahrzeug (1) einer Soll-Route folgt, **dadurch gekennzeichnet, dass** das Leitsystem (14) ausgebildet und eingerichtet ist, um die Soll-Route unter Berücksichtigung einer vorab ermittelten Trajektorie des jeweiligen Transportfahrzeugs (1) vorzugeben und an die Fahrzeugsteuerung (13) zu übermitteln, wobei unter Trajektorie ein Bewegungspfad des jeweiligen Transportfahrzeugs (1) während eines Fahrmanövers verstanden wird, wobei die Trajektorie und/oder die aktuell vorgegebene Soll-Route mindestens eines anderen Transportfahrzeugs (1) berücksichtigt wird, um Konflikte zwischen den Trajektorien und/oder den Soll-Routen mehrerer Transportfahrzeuge (1) zu vermeiden, wobei für verschiedene Transportfahrzeuge (1) verschiedene Trajektorien ermittelt und verschiedene Soll-Routen vorgegeben werden.

7. System nach Anspruch 6, **dadurch gekennzeichnet, dass** das System, insbesondere das Leitsystem (14) und die Fahrzeugsteuerung (13), ausgebildet und eingerichtet ist, um ein Verfahren nach einem der vorherigen Ansprüche auszuführen.

8. Verwendung eines Verfahrens und/oder Systems nach einem der vorherigen Ansprüche für ein Transportfahrzeug (1), dessen Ladefläche (11) von Führungselementen (11a) zum Führen und Ausrichten eines auf der Ladefläche (11) abzustellenden Containers (12) begrenzt ist.

## Claims

1. Method for operating automated guided transport vehicles (1) for containers (12), which are each guided in an automated manner during forwards travel and also during rearwards travel and which comprise a towing vehicle (1a) and a trailer (1b) having a loading surface (11) for at least one container (12), wherein the respective transport vehicle (1), in particular the towing vehicle (1a), comprises a vehicle controller (13) in order to actuate a steering mechanism and a travel drive of the transport vehicle (1) such that the transport vehicle (1) follows a desired route, **characterised in that** the desired route is specified in consideration of a previously determined trajectory of the respective transport vehicle (1), wherein trajectory is understood to mean a movement path of the respective transport vehicle (1) during a driving manoeuvre, wherein the trajectory and/or the currently specified desired route of at least one other transport vehicle (1) is considered in order to avoid conflicts between the trajectories and/or the desired routes of a plurality of transport vehicles (1), wherein different trajectories are determined and different desired routes are specified for different transport vehicles (1).

2. Method as claimed in claim 1, **characterised in that** the trajectory is considered in consideration of the kinematic boundary conditions of the transport vehicle (1).

3. Method as claimed in any one of claims 1 or 2, **characterised in that** the specified desired route is compared with actual values of a position and orientation of the transport vehicle (1) and a deviation of the actual values from the desired route is reduced by correspondingly actuating the steering mechanism and/or the travel drive.

4. Method as claimed in claim 3, **characterised in that** the position and alignment of the transport vehicle (1) are determined in consideration of the articulation angle (α1) between the towing vehicle (1a) and the trailer (1b).

5. Method as claimed in any one of claims 1 to 4, **characterised in that** a steering angle (α2) is adjusted, by means of the steering mechanism, in dependence upon an actual value of an articulation angle (α1) between the towing vehicle (1a) and the trailer (1b).

6. System for operating automated guided transport vehicles (1) for containers (12), comprising a management system (14) and transport vehicles (1) for containers (12), which can each be guided in an automated manner during forwards travel and also during rearwards travel and which comprise a towing vehicle (1a) and a trailer (1b) having a loading surface (11) for at least one container (12), wherein the respective transport vehicle (1), in particular the towing vehicle (1a), comprises a vehicle controller (13) in order to actuate, in an automated manner, a steering mechanism and a travel drive of the transport vehicle (1) such that the transport vehicle (1) follows a desired route, **characterised in that** the management system (14) is configured and designed to specify the desired route in consideration of a previously determined trajectory of the respective transport vehicle (1) and to transmit same to the vehicle controller (13), wherein trajectory is understood to mean a movement path of the respective transport vehicle (1) during a driving manoeuvre, wherein the trajectory and/or the currently specified desired route of at least one other transport vehicle (1) is considered in order to avoid conflicts between the trajectories and/or the desired routes of a plurality of transport vehicles (1), wherein different trajectories are determined and different desired routes are specified for different transport vehicles (1).

7. System as claimed in claim 6, **characterised in that** the system, in particular the management system (14) and the vehicle controller (13), is configured and designed to implement a method as claimed in any one of the preceding claims.

8. Use of a method and/or a system as claimed in any one of the preceding claims for a transport vehicle (1), the loading surface (11) of which is delimited by guide elements (11a) for guiding and aligning a container (12) to be placed on the loading surface (11).

## Revendications

1. Procédé de fonctionnement de véhicules de transport à guidage automatique (1) qui sont destinés à des conteneurs (12), qui sont guidés chacun automatiquement aussi bien en marche avant qu'en marche arrière, et qui comportent chacun un tracteur (1a) et une remorque (1b) pourvue d'une surface de chargement (11) destinée à au moins un conteneur (12), le véhicule de transport respectif (1), en particulier le tracteur (1a), comporte une commande de véhicule (13) pour commander une direction et un système d'entraînement du véhicule de transport (1) de sorte que le véhicule de transport (1) suive un itinéraire de consigne, **caractérisé en ce que** l'itinéraire de consigne est spécifié avec prise en compte d'une trajectoire préalablement déterminée du véhicule de transport respectif (1), étant entendu que la trajectoire est un chemin de déplacement du véhicule de transport respectif (1) pendant une manœuvre de roulement, la trajectoire et/ou l'itinéraire de consigne actuellement spécifié d'au moins un autre véhicule de transport (1) étant pris en compte afin d'éviter des conflits entre les trajectoires et/ou les itinéraires de consigne de plusieurs véhicules de transport (1), différentes trajectoires étant déterminées, et différents itinéraires de consigne étant spécifiés, pour différents véhicules de transport (1).

2. Procédé selon la revendication 1, **caractérisé en ce que** la prise en compte de la trajectoire est effectuée avec prise en compte des conditions aux limites cinématiques du véhicule de transport (1).

3. Procédé selon l'une des revendications 1 ou 2, **caractérisé en ce que** l'itinéraire de consigne prédéterminé est comparé à des valeurs réelles d'une position et d'une orientation du véhicule de transport (1) et un écart des valeurs réelles par rapport à l'itinéraire de consigne est réduit par une commande appropriée de la direction et/ou du système d'entraînement.

4. Procédé selon la revendication 3, **caractérisé en ce que** la position et l'orientation du véhicule de transport (1) sont déterminées avec prise en compte de l'angle d'articulation (α1) entre le tracteur (1a) et la remorque (1b).

5. Procédé selon l'une des revendications 1 à 4, **caractérisé en ce qu'**un angle de braquage (α2) est réglé au moyen de la direction, en fonction d'une valeur réelle d'un angle d'articulation (α1) entre le tracteur (1a) et la remorque (1b).

6. Système de fonctionnement de véhicules de transport à guidage automatique (1) destinés à des conteneurs (12), ledit système comprenant un système de direction (14) et des véhicules de transport (1) qui sont destinés à des conteneurs (12), qui peuvent chacun être guidés automatiquement aussi bien en marche avant qu'en marche arrière et qui comportent chacun un tracteur (1a) et une remorque (1b) pourvue d'une surface de chargement (11) destinée à au moins un conteneur (12), le véhicule de transport respectif (1), en particulier le tracteur (1a), comportant une commande de véhicule (13) afin de commander automatiquement une direction et un système d'entraînement du véhicule de transport (1) de sorte que le véhicule de transport (1) suive un itinéraire de consigne, **caractérisé en ce que** le système de direction (14) est conçu et adapté pour spécifier l'itinéraire de consigne avec prise en compte d'une trajectoire préalablement déterminée du véhicule de transport respectif (1) et le transmettre à la commande de véhicule (13), étant entendu que la trajectoire est un chemin de déplacement du véhicule de transport respectif (1) pendant une manœuvre de roulement, la trajectoire et/ou l'itinéraire de consigne actuellement spécifié d'au moins un autre véhicule de transport (1) étant pris en compte afin d'éviter des conflits entre les trajectoires et/ou les itinéraires de consigne de plusieurs véhicules de transport (1), différentes trajectoires étant déterminées, et différents itinéraires de consigne étant spécifiés, pour différents véhicules de transport (1).

7. Système selon la revendication 6, **caractérisé en ce que** le système, notamment le système de direction (14) et la commande de véhicule (13), sont conçu et adapté pour mettre en oeuvre un procédé selon l'une des revendications précédentes.

8. Utilisation d'un procédé et/ou d'un système selon l'une des revendications précédentes pour un véhicule de transport (1) dont la surface de chargement (11) est limitée par des éléments de guidage (11a) destinés à guider et orienter un conteneur (12) à placer sur la surface de chargement (11).
